# DEMANDE DE BREVET EUROPEEN

(11) **EP 4 663 986 A1**
(43) Date de publication de la demande: **17.12.2025**
(21) Numéro de dépôt: 25305847.3
(22) Date de dépôt: 10.06.2025
(51) Int. Cl.: F16K 11/085, F16K 27/06, F16K 5/04

(54) **VANNE MULTIVOIES MODULABLE**

(30) Priorité: 14.06.2024 FR 2406339
(71) Demandeur: Schrader, 25301 Pontarlier cedex (FR)
(72) Inventeur: FAGON, Loïc, 25300 PONTARLIER (FR); ROBLOT, Thomas, 25300 HOUTAUD (FR)
(74) Mandataire: Novagraaf Technologies

(57) **Abrégé**

La présente invention a pour objet une vanne (10) multivoies comprenant au moins un corps principal (12) et un boisseau,
le corps principal (12) formant au moins deux tubulures (30),
le corps principal (12) comprenant au moins deux nervures annulaires s'étendant à l'extérieur d'un volume interne (14) et autour d'une bouche d'entrée d'une des tubulures (30),
la vanne (10) comprenant au moins deux inserts (50, 50a, 50b, 50c),
chaque insert (50, 50a, 50b, 50c) comprenant au moins un embout interne configuré pour s'insérer dans une des tubulures (30),
chaque insert (50, 50a, 50b, 50c) comprenant un élément d'étanchéité fluidique emmanché sur l'embout interne et configuré pour être au contact du boisseau lorsque l'embout interne se loge dans la tubulure (30).

## Description

### Domaine technique de l'invention

La présente invention concerne une vanne multivoies configurée pour permettre la circulation d'un fluide selon plusieurs voies de passage fluidique.

### Arrière-plan technique

Les vannes multivoies sont couramment utilisées pour permettre de diriger un fluide au travers de différentes voies de passage fluidique suivant l'utilisation souhaitée.

De manière habituelle, les vannes multivoies sont composées d'un boisseau monté mobile en rotation au sein d'un corps principal de la vanne. Le corps principal de la vanne comprend alors au moins deux ouvertures configurées pour être reliées fluidiquement l'une à l'autre par un canal formé dans le boisseau.

Ainsi, la rotation du boisseau au sein du corps principal participe à la formation de la voie de passage fluidique de la vanne et permet ainsi de diriger le fluide depuis une des ouvertures du corps principal vers l'autre ouverture.

Le boisseau porte alors des éléments d'étanchéité fluidique de telle sorte à rendre étanche la voie de passage fluidique formée entre les ouvertures du corps principal et son canal.

Cependant, le positionnement des éléments d'étanchéité fluidique sur le boisseau présente des inconvénients notamment quant au bon positionnement de ces derniers et également quant à la solidité de ce positionnement dans le temps.

De plus, les vannes multivoies actuelles ne permettent pas de s'adapter aux différents besoins d'utilisation et manque ainsi de modularité dans la configuration des voies de passage fluidique.

Ainsi, il existe actuellement un besoin dans l'amélioration de l'étanchéité et de la modularité des vannes multivoies.

De fait, le but de l'invention est de proposer une vanne multivoies dont les performances d'étanchéité sont améliorées tout en offrant une modularité accrue dans la configuration des voies de passage fluidique.

### Résumé de l'invention

L'invention propose une vanne multivoies comprenant au moins un corps principal et un boisseau, le corps principal délimitant un volume interne configuré pour recevoir le boisseau,
le corps principal formant au moins deux tubulures s'étendant selon deux axes distincts, chaque tubulure comprenant une bouche d'entrée à son extrémité axiale externe et une bouche de sortie à son extrémité axiale interne débouchant dans le volume interne du corps principal,
le corps principal comprenant au moins deux nervures annulaires s'étendant à l'extérieur du volume interne, chaque nervure annulaire s'étendant autour d'au moins une des bouches d'entrée d'une des tubulures,
la vanne comprenant au moins deux inserts,
chaque insert comprenant au moins un embout interne configuré pour s'insérer dans une des tubulures,
chaque insert comprenant une structure annulaire qui comprend au moins une extension radiale configurée pour être au contact de la nervure annulaire lorsque l'embout interne se loge dans la tubulure,
chaque insert comprenant un élément d'étanchéité fluidique emmanché sur l'embout interne et configuré pour être au contact du boisseau lorsque l'embout interne se loge dans la tubulure.

Selon d'autres caractéristiques de l'invention :
- le corps principal comprend au moins deux portions annulaires qui s'étendent chacune coaxialement autour d'une des tubulures, deux premières nervures annulaires s'étendant chacune axialement en saillie d'une couronne externe d'une des portions annulaires ;
- l'embout interne de chacun des inserts comprend une extrémité formant un col, l'élément d'étanchéité fluidique présentant une forme annulaire délimitée par une paroi périphérique et à l'extrémité de laquelle s'étend une lèvre d'étanchéité configurée pour recouvrir au moins en partie le col de l'embout interne et de manière à être au contact du boisseau lorsque l'embout interne se loge dans la tubulure ;
- le col de l'embout interne présente une forme concave, la lèvre d'étanchéité de l'élément d'étanchéité présentant une forme concave complémentaire avec le col ;
- l'embout interne comprend des nervures de guidage périphériques et la paroi périphérique de l'élément d'étanchéité fluidique comprend des rainures internes configurées pour coopérer avec les nervures de guidage, de manière à définir la position angulaire de l'élément d'étanchéité sur l'embout interne ;
- un moyen de détrompage angulaire est formé sur une surface latérale intérieure de chacune des portions annulaires et au moins un des inserts comprend un organe de détrompage complémentaire apte à coopérer avec le moyen de détrompage angulaire de manière à définir une position angulaire de l'insert par rapport à la tubulure ;
- chacun des inserts délimite un canal de passage fluidique autorisant le passage d'un fluide au travers de la tubulure lorsque l'insert est monté dans la tubulure ou forme un bouchon bloquant le passage d'un fluide au travers de la tubulure ;
- le corps principal comprend au moins deux deuxièmes nervures annulaires qui s'étendent chacune circulairement et de manière coaxiale autour d'une des bouches d'entrée d'une des tubulures et de manière qu'elles s'étendent chacune dans un volume délimité par l'une des portions annulaires ;
- les deuxièmes nervures annulaires sont décalées axialement par rapport aux premières nervures annulaires, en considérant l'axe de leur tubulure respective ;
- la vanne comprend au moins un insert dont l'extension radiale est configurée pour être au contact d'une des deuxièmes nervures annulaires lorsque son embout interne se loge dans la tubulure ;
- au moins les au moins deux tubulures comprennent leurs bouches d'entrée qui s'étendent dans un plan commun ;
- le corps principal comprend une troisième nervure qui s'étend en périphérie des premières nervures annulaires associées aux au moins deux tubulures dont les bouches d'entrée s'étendent dans un plan commun ;
- la vanne comprend une pièce de raccordement fluidique configurée pour recouvrir au moins les deux bouches d'entrée qui s'étendent dans un plan commun, des au moins deux tubulures, la pièce de raccordement fluidique comprenant au moins une paroi de liaison qui s'étend en recouvrement de la troisième nervure.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] est une vue générale en perspective d'une vanne multivoies selon un premier exemple, comprenant un corps principal avec quatre tubulures dans lesquelles sont montés quatre inserts ;
[Fig.2] est une vue en perspective du corps principal de la vanne multivoies de la figure 1 ;
[Fig.3] est une vue éclatée d'une partie de la vanne multivoies de la figure 1 montrant le corps principal en perspective et un boisseau monté sur un arbre de rotation ;
[Fig.4] est une vue en coupe radiale de la vanne multivoies de la figure 1 montrant plusieurs voies de passage fluidique ;
[Fig.5] est une vue en perspective d'un des inserts, selon un premier exemple, de la vanne multivoies de la figure 1 ;
[Fig.6] est une vue en coupe d'une partie de la vanne multivoies de la figure 1 montrant l'insert de la figure 5 monté dans une des tubulures de la vanne multivoies de la figure 1 ;
[Fig.7] est une vue en coupe d'une partie de la vanne multivoies de la figure 1 montrant l'insert de la figure 5 monté dans une des tubulures de la vanne multivoies de la figure 1 et montrant un clapet anti-retour installé dans l'insert ;
[Fig.8] est une vue générale en perspective d'une vanne multivoies selon un deuxième exemple ;
[Fig.9] est une vue en perspective du corps de la vanne multivoies selon le deuxième exemple de la figure 8, comprenant quatre paires de tubulures ;
[Fig.10] est une vue en coupe axiale d'une partie de la vanne multivoies de la figure 8 montrant l'insert selon le premier exemple et un insert selon un deuxième exemple chacun monté dans une des tubulures d'une des paires de tubulures ;
[Fig.11] est une vue en coupe axiale d'une partie de la vanne multivoies de la figure 8 montrant deux inserts selon un troisième exemple chacun monté dans une des tubulures d'une des paires de tubulures et montrant une pièce de raccordement fluidique recouvrant ladite paire de tubulures.

### Description détaillée de l'invention

Dans la description qui va suivre, des éléments identiques, similaires ou analogues seront désignés par les mêmes chiffres de référence.

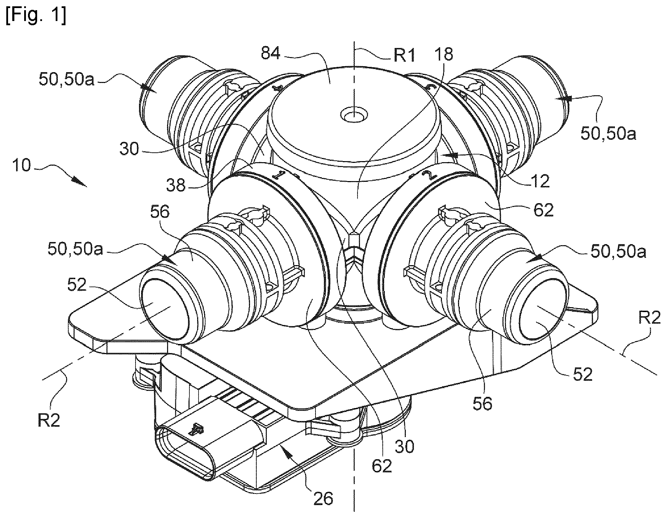

La figure 1 illustre une vanne 10 dite multivoies selon un premier exemple.

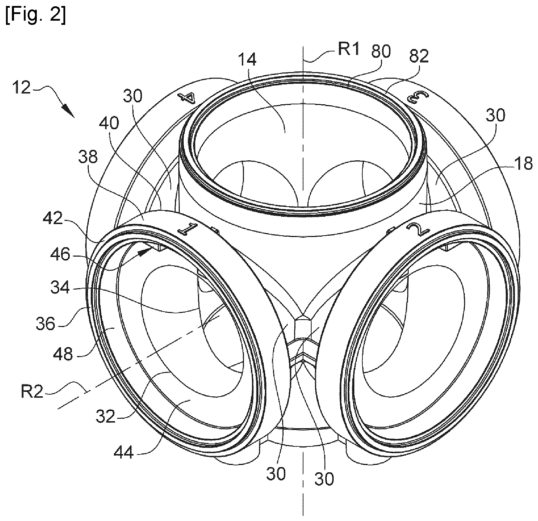

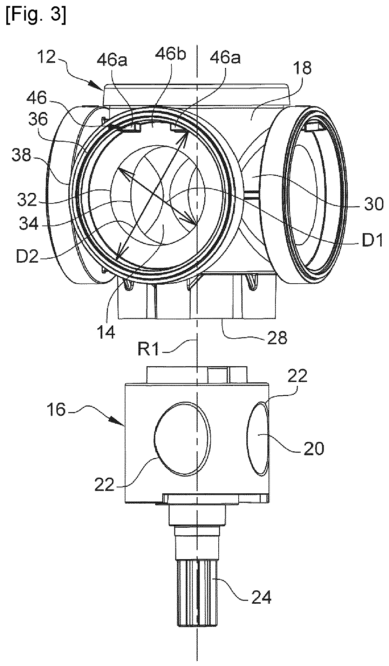

La vanne 10 comprend un corps principal 12, particulièrement visible à la figure 2, délimitant un volume interne 14 configuré pour recevoir un boisseau 16 de la vanne 10, visible à la figure 3.

De manière plus précise, le corps principal 12 comprend une paroi principale 18 dont la surface interne délimite le volume interne 14 du corps principal 12.

En rapport avec la figure 2, la paroi principale 18 s'étend autour d'un premier axe R1 ici de révolution, de telle sorte à présenter une forme générale cylindrique.

Ainsi, considérant la figure 3, le boisseau 16 se logeant dans le volume interne 14 présente une forme périphérique complémentaire à la forme de la paroi principale 18, c'est-à-dire une forme périphérique cylindrique, coaxiale avec le premier axe R1 de révolution.

Par ailleurs, le boisseau 16 comprend un diamètre strictement inférieur à un diamètre interne de la paroi principale 18 du corps principal 12, de telle sorte qu'une distance radiale non nulle persiste entre une périphérie externe du boisseau 16 et une surface interne de la paroi principal 18 du corps principal 12, autorisant ainsi la rotation du boisseau 16 dans le volume interne 14 sans frottement.

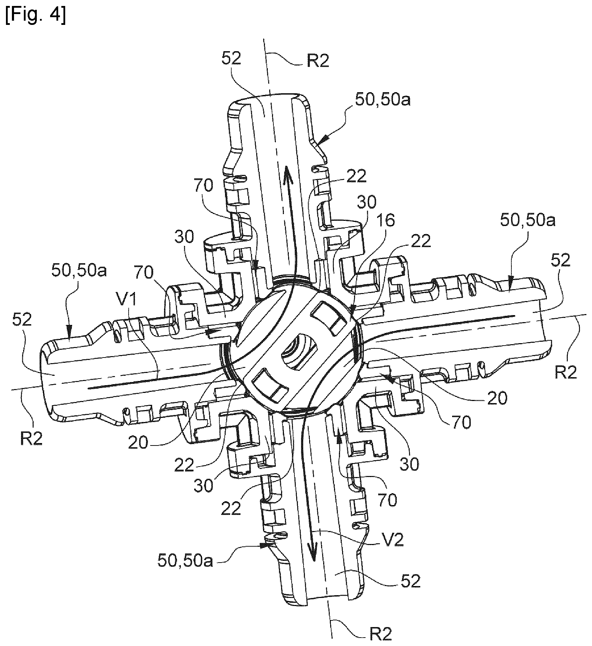

Tel que visible sur l'exemple des figures 3 et 4, le boisseau 16 comprend deux canaux internes 20 débouchant chacun sur deux orifices périphériques 22.

Notamment, chacun des canaux internes 20 permet de guider un fluide depuis un de ses orifices périphérique 22 vers son autre orifice périphérique 22.

Le boisseau 16 selon l'exemple illustré, est monté sur un arbre d'entrainement 24 configuré pour déplacer en rotation ledit boisseau 16 via une unité d'entrainement 26, visible à la figure 1.

Plus particulièrement, l'unité d'entrainement 26 comprend au moins un moteur d'entrainement, non visible, apte à entrainer en rotation l'arbre d'entrainement qui lui-même entraine le boisseau 16 auquel il est lié en rotation, autour du premier axe de rotation R1 de telle sorte à modifier la position angulaire du boisseau 16 au sein du volume interne 14.

Tel que visible à la figure 3, le corps principal 12 de la vanne 10 comprend une ouverture axiale inférieure 28, débouchant dans le volume interne 14, et au travers de laquelle est monté le boisseau 16 dans le volume interne 14 du corps principal 12.

Ainsi, lorsque le boisseau 16 est monté dans le volume interne 14 du corps principal 12, l'arbre d'entrainement 24 s'étend au moins en partie au travers de l'ouverture axiale inférieure 28 de manière à être lié à l'unité d'entrainement précédemment décrite.

La fonctionnalité du boisseau 16 au sein de la vanne 10 multivoies sera détaillée plus loin dans la suite de la description.

En rapport avec l'exemple de la figure 2, le corps principal 12 de la vanne 10 comprend quatre tubulures 30, chacune participant à former une des voies de passages fluidique de la vanne 10.

Chacune des tubulures 30 du corps principal 12 débouche dans le volume interne 14 du corps principal 12 de la vanne 10.

Plus particulièrement, les quatre tubulures 30 s'étendent circulairement autour du premier axe R1, ici de révolution, et en étant espacées angulairement les unes des autres d'un angle de degré égal.

Selon l'exemple illustré, chacune des tubulures 30 s'étend autour d'un deuxième axe R2, ici de révolution, distinct.

Selon l'exemple illustré, chacun des deuxièmes axes R2 de révolution est perpendiculaire au premier axe R1 de révolution.

En considérant leur deuxième axe R2 de révolution respectif, chacune des tubulures 30 s'étend axialement entre une bouche d'entrée 32 et une bouche de sortie 34, la bouche de sortie 34 étant la bouche débouchant dans le volume interne 14 du corps principal 12.

Dit autrement, la bouche d'entrée 32 de chaque tubulure 30 est positionnée à une extrémité axiale externe de sa tubulure 30 et la bouche de sortie 34 de chaque tubulure 30 est positionnée à une extrémité axiale interne de sa tubulure 30, considérant le deuxième axe R2 de révolution respectif de chaque tubulure 30.

Tel que visible à la figure 2, une première nervure annulaire 36 s'étend circulairement en périphérie de chacune des tubulures 30.

Il convient de considérer que, dans la suite de la description, l'environnement structurel associé à une seule tubulure 30, telle que la première nervure annulaire 36, sera détaillé mais que ces caractéristiques structurelles s'appliquent *mutatis mutandis à* l'ensemble des tubulures de la vanne 10.

Particulièrement visible à la figure 2, une portion annulaire 38 s'étend coaxialement autour de la bouche d'entrée 32 de la tubulure 30 et en dehors du volume interne 14 du corps principal 12.

On définit alors une couronne interne 40 de la portion annulaire 38, tournée vers la paroi principale 18 du corps principal, et une couronne externe 42 de la portion annulaire 38 tournée à l'opposé de la paroi principale 18, considérant le deuxième axe R2 de révolution associé.

En rapport avec la figure 3 et en considérant le deuxième axe R2 de révolution, on définit un premier diamètre D1 de la bouche d'entrée 32 et un deuxième diamètre D2 interne de la portion annulaire 38, le deuxième diamètre D2 étant ici strictement supérieur au premier diamètre D1.

En d'autres termes, la portion annulaire 38 s'étend à une distance radiale non nulle de la circonférence de la bouche d'entrée 32 de la tubulure 30.

Ainsi et selon l'exemple illustré de la figure 2, non limitatif, une surface de liaison 44 s'étend radialement depuis la circonférence de la bouche d'entrée 32 de la tubulure 30 vers une surface latérale intérieure 48 de la portion annulaire 38 et de telle sorte qu'elle les relie.

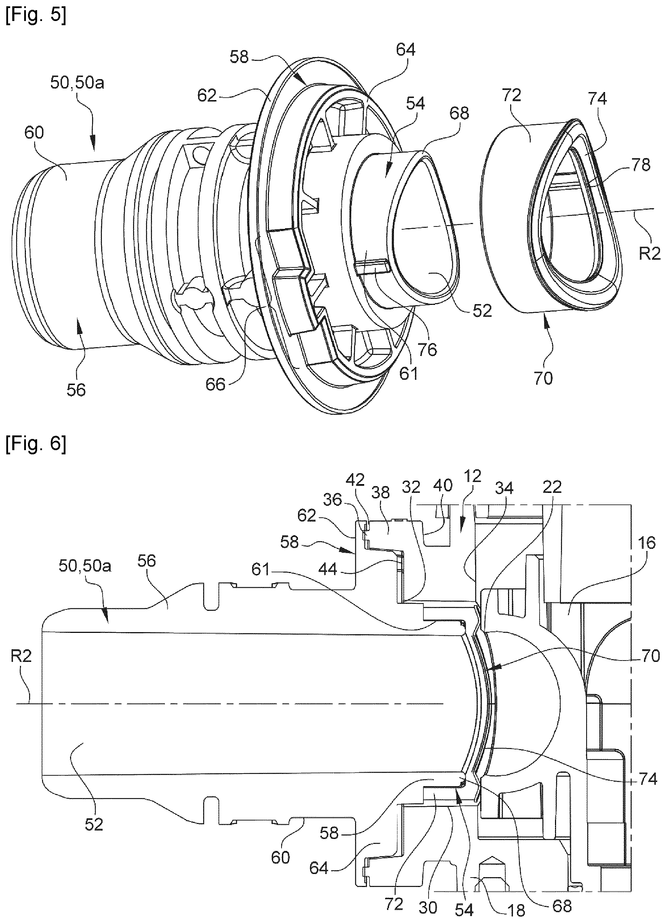

Tel que visible aux figures 2 et 6, la première nervure annulaire 36 s'étend axialement en saillie de la couronne externe 42 de la portion annulaire 38, considérant le deuxième axe R2 de révolution de la tubulure 30 associée.

De manière plus précise, la première nervure annulaire 36 s'étend circulairement et coaxialement, considérant le deuxième axe R2 de révolution, autour de sa tubulure 30.

On comprend alors que la première nervure annulaire 36 est décalée de la bouche d'entrée 32 de la tubulure 30 associée, selon des directions axiale et radiale considérant le deuxième axe R2 de révolution.

Tel que particulièrement visible à la figure 3, un moyen de détrompage angulaire 46 s'étend en saillie depuis la surface latérale intérieure 48 de la portion annulaire 38.

Selon l'exemple illustré, le moyen de détrompage angulaire 46 comprend deux ergots 46a qui s'étendent en saillie depuis la surface latérale intérieure 48 de la portion annulaire et qui délimitent angulairement un espace de réception 46b d'un organe de détrompage complémentaire 66, visible à la figure 5.

La coopération entre le moyen de détrompage angulaire 46 et l'organe de détrompage complémentaire 66 sera détaillée plus loin dans la suite de la description détaillée.

Tel que visible sur l'exemple de réalisation de la figure 1, la vanne 10 multivoies comprend quatre inserts 50, chacun configuré pour s'insérer au moins en partie dans une des tubulures 30 décrites précédemment.

Il convient de considérer que, dans la suite de la description, seul un des inserts 50 associé à l'une des tubulures 30 sera décrit mais que les caractéristiques structurelles et fonctionnelles de l'insert 50 décrit s'appliquent *mutatis mutandis à* l'ensemble des inserts de la vanne 10.

L'insert 50, 50a prend ici la forme d'un tube qui s'étend coaxialement au deuxième axe R2 de révolution de sa tubulure 30 associée, lorsqu'il est monté dans cette dernière.

En rapport avec les figures 5 et 6, une face latérale intérieure de l'insert 50, 50a délimite un canal de passage fluidique 52 de l'insert 50, 50a.

L'insert 50, 50a selon cet exemple est délimité axialement par un embout interne 54 et un embout externe 56, l'embout interne 54 étant configuré pour s'insérer dans la tubulure 30 associée et l'embout externe 56 étant configuré pour s'étendre en dehors de la tubulure 30 associée lorsque l'insert 50 est monté dans la tubulure 30 tel que visible à la figure 6.

On comprend alors que l'embout externe 56 est configuré pour être couplé fluidiquement à un raccordement fluidique annexe, ici non visible.

Par ailleurs, l'insert 50, 50a comprend une structure annulaire 58 qui s'étend radialement depuis une face latérale externe 60 de l'embout externe 56 de l'insert 50, 50a.

Plus particulièrement, la structure annulaire 58 est formée au moins par une extension radiale 62 configurée pour être axialement au contact de la première nervure annulaire 36 décrite précédemment, lorsque l'insert 50, 50a est monté dans sa tubulure 30, tel que visible à la figure 6.

Dit autrement, l'extension radiale 62 est configurée pour s'étendre radialement jusqu'en recouvrement de la première nervure annulaire 36.

Ainsi, on comprend que le contact de l'extension radiale 62 avec la première nervure annulaire 36 forme une butée axiale de l'insert 50, 50a par rapport à la tubulure 30.

De plus, le contact entre l'extension radiale 62 et la première nervure annulaire 36 permet de former une zone de soudage où une opération de soudage de ces deux éléments peut être mise en œuvre. Une telle opération de soudage permet notamment de solidariser l'insert 50, 50a sur le corps principal 12, et notamment dans sa tubulure 30.

Selon un exemple non limitatif, le soudage entre l'extension radiale 62 et la première nervure annulaire 36 est mise en œuvre par un soudage laser.

On comprend par ailleurs, qu'au moins les tubulures et les inserts sont fait dans un matériau compatible avec une opération de soudage, par exemple un soudage laser.

Par ailleurs, selon l'exemple de l'insert 50, 50a visible à la figure 5, la structure annulaire 58 comprend un ensemble de surépaisseurs 64 qui s'étendent axialement depuis l'extension radiale 62 et de manière qu'elles soient positionnées axialement entre l'extension radiale 62 et la surface de liaison 44 décrite précédemment, lorsque l'insert 50 est monté sur sa tubulure 30, tel que visible à la figure 6.

L'ensemble de surépaisseurs 64 forme ainsi un renfort structurel de l'extension radiale 62 permettant de limiter les risques de déformation lorsqu'une force est appliquée à l'insert 50, 50a pour son introduction dans la tubulure 30, tel que décrite précédemment.

Par ailleurs et tel que visible à la figure 5, l'ensemble de surépaisseurs 64 forme l'organe de détrompage complémentaire 66, configuré pour coopérer avec le moyen de détrompage angulaire 46 décrit précédemment.

Plus particulièrement, l'organe de détrompage complémentaire 66 présente une complémentarité de forme avec le moyen de détrompage angulaire 46.

De manière encore plus précise, l'organe de détrompage complémentaire 66 est ici formé par des zones de dégagement radial configurés pour recevoir les ergots du moyen de détrompage angulaire et entres lesquels s'étend un portion radiale destinée à loger dans l'espace angulaire du moyen de détrompage angulaire.

Une telle coopération entre le moyen de détrompage angulaire 46 et l'organe de détrompage complémentaire 66 permet d'une part de définir une position angulaire de l'insert 50, 50a par rapport à la tubulure 30 et d'autre part de bloquer ladite position angulaire définie avant le soudage de l'insert 50, 50a sur la première nervure annulaire 36 tel que décrit précédemment.

Toujours visible à la figure 5, l'embout interne 54 de l'insert 50, 50a comprend une extrémité formant un col 68, qui présente une forme courbe.

De manière plus précise, le col 68 de l'embout interne 54 présente une forme concave.

Tel que visible à la figure 6, le col 68 de l'embout interne 54 est dirigé vers le boisseau 16 logé dans le volume interne 14 du corps principal 12.

Ainsi, on comprend que le col 68 de l'embout interne 54 présente une complémentarité de forme avec le boisseau 16 de forme cylindrique décrit précédemment.

Tel que visible aux figures 5 et 6, l'insert 50, 50a comprend un élément d'étanchéité fluidique 70.

Selon l'exemple illustré des figures 5 et 6, l'élément d'étanchéité fluidique 70 est emmanché sur l'embout interne 54 de l'insert 50, 50a.

De manière plus précise, l'élément d'étanchéité fluidique 70 comprend une paroi périphérique 72 disposée en recouvrement d'une enveloppe extérieure 61 de l'embout interne 54, et comprend une lèvre d'étanchéité 74 qui s'étend à l'extrémité de la paroi périphérique 72 et de telle sorte qu'elle recouvre le col 68 de l'embout interne 54.

Ainsi, on comprend que lorsque l'insert 50, 50a est monté dans sa tubulure 30, la lèvre d'étanchéité 74 est disposée axialement entre le col 68 de l'embout interne 54 et le boisseau 16, tel que visible à la figure 6.

Par ailleurs, la lèvre d'étanchéité 74 est configurée pour être au contact du boisseau 16 de telle sorte qu'elle assure l'étanchéité fluidique entre le canal de passage fluidique 52 de l'insert 50 et le boisseau 16, une fois l'opération de soudage de l'insert 50 mise en œuvre.

On comprend par ailleurs que la lèvre d'étanchéité fluidique 74 assure l'étanchéité fluidique entre le canal de passage fluidique 52 de l'insert 50 et le canal interne 20 du boisseau 16 lorsque l'un des orifices périphériques 22 du boisseau 16 est disposé en regard du col 68 de l'embout interne 54.

Selon un exemple non limitatif de l'invention, au moins la lèvre d'étanchéité 74 est faite en un matériau souple de telle sorte qu'elle résiste à des efforts de compression contre le boisseau 16, définis par l'opération de soudage, tout en n'entravant pas la rotation de ce dernier dans le volume interne 14, tel que décrit précédemment.

Par exemple, l'élément d'étanchéité fluidique 70 est fait en EPDM et PTFE. On tire avantage du matériau PTFE en ce qu'il permet de limiter les frottements de l'élément d'étanchéité contre le boisseau lors du fonctionnement de la vanne 10.

Par ailleurs, l'élément d'étanchéité fluidique 70 présente une complémentarité de forme avec le col 68 de l'embout interne 54.

En d'autres termes, on comprend que l'élément d'étanchéité fluidique 70 est configuré de telle sorte que sa lèvre d'étanchéité 74 présente un profil concave complémentaire de la forme cylindrique du boisseau 16.

Tel que visible à la figure 5, l'embout interne 54 comprend des nervures de guidage 76 périphériques qui s'étendent en saillie depuis son enveloppe extérieure 61, et selon une direction axiale considérant le deuxième axe R2 de révolution de la tubulure associée.

De plus, la paroi périphérique 72 de l'élément d'étanchéité fluidique 70 comprend des rainures internes 78 configurées pour coopérer avec les nervures de guidage 76 périphériques formées sur l'embout interne 54.

On comprend alors que la coopération entre les nervures de guidage 76 et les rainures internes 78 forme un moyen de détrompage assurant un positionnement angulaire adéquat de l'élément d'étanchéité fluidique 70 sur l'embout interne 54.

Ainsi, la coopération entre les nervures de guidage 76 et les rainures internes 78 permet de guider le positionnement angulaire de l'élément d'étanchéité fluidique 70 sur l'embout interne 54 et d'en assurer la bonne position.

Au surplus, la coopération entre les nervures de guidage 76 et les rainures internes 78 permet de s'assurer que les formes complémentaires de la lèvre d'étanchéité 74 et du col 68 s'accouplent de manière adéquate, telle que décrite précédemment.

Tel que visible à la figure 2, le corps principal 12 comprend une ouverture axiale supérieure 80, opposée axialement à l'ouverture axiale inférieure 28, considérant le premier axe R1 de révolution.

L'ouverture axiale supérieure 80 est délimitée par une nervure périphérique 82 s'étendant axialement en saillie.

Selon l'exemple de la figure 1, un capuchon 84 est configuré pour fermer l'ouverture axiale supérieure 80.

De manière plus précise, le capuchon 84 est configuré pour reposer sur la nervure périphérique 82.

Ainsi, le soudage du capuchon 84 en recouvrement de l'ouverture axiale supérieure 80, via la nervure périphérique 82, permet de clore de manière étanche l'ouverture axiale supérieure 80.

Il convient par ailleurs de considérer que de manière non limitative, un cinquième insert tel que décrit précédemment pourrait être inséré dans l'ouverture axiale supérieure, le boisseau de la vanne présentant alors une structure adaptée à ce cinquième insert de telle sorte à former une autre voie de passage fluidique entre ce cinquième insert et les autres inserts déjà décrits.

Le fonctionnement du boisseau 16 selon l'exemple de la figure 1 va maintenant être décrit en détail au moyen de la figure 4.

Tel que visible à la figure 4, le boisseau 16 présente ses quatre orifices périphériques 22 qui sont répartis de telle sorte qu'il soit chacun espacé d'un angle de 90° d'un orifice périphérique, circulairement adjacent.

On comprend alors qu'une telle disposition des orifices périphériques 22 du boisseau 16 leur permet de chacun coopérer avec un des canaux de passage fluidique 52 d'un des insert 50, 50a lorsque ceux-ci sont insérés dans leur tubulure 30.

Ainsi et selon l'exemple non limitatif illustré de la figure 4, la coopération entre les inserts 50 et le boisseau 16 permet de former deux voies V1, V2 fluidiques dans la vanne 10 multivoies.

Notamment, chacune des voies V1, V2 permet la circulation fluidique depuis l'un des canaux de passage fluidique 52 d'un des inserts 50 vers un des canaux internes 20 du boisseau puis vers le canal de passage fluidique 52 d'un des inserts 50 angulairement adjacent de l'autre insert 50.

On comprend par ailleurs que la rotation du boisseau 16 telle que décrite précédemment permet de modifier les trajectoires des deux voies V1, V2 fluidiques de la vannes 10 en reliant des canaux de passage fluidique 52 de différents inserts 50 adjacents.

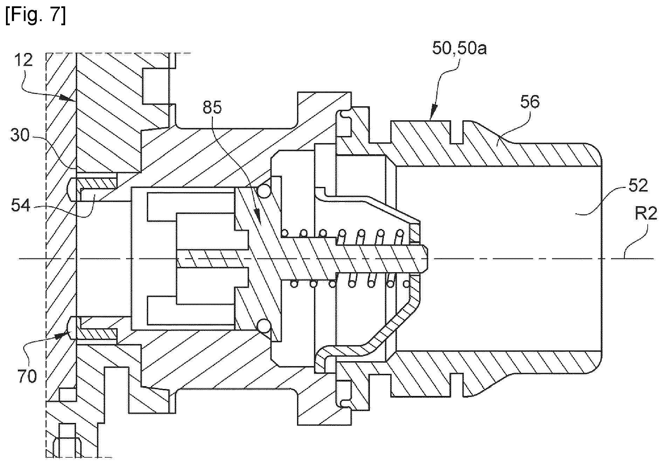

Selon un exemple de la figure 7, la vanne 10 multivoies peut comprendre un clapet anti-retour 85 logé dans au moins un de ses inserts 50.

Le clapet anti-retour 85 permet entre autres d'autoriser le passage d'un fluide dans un seul sens de circulation sans risque de retour du fluide dans un sens inverse.

Par exemple, le clapet anti-retour 85 peut être configuré pour autoriser la circulation d'un fluide dans un sens entrant, c'est-à-dire vers le volume interne du corps principal 12 de la vanne 10, ou dans un sens sortant, c'est-à-dire vers un volume extérieur à la vanne 10.

Le clapet anti-retour 85 est ici disposé dans le canal de passage fluidique 52 d'un des inserts 50, au moins au niveau de l'embout externe 56 dudit insert 50.

Selon d'autres exemple non illustré, on peut prévoir que vanne intègre un capteur de pression et/ou de température dans un des canaux de passage fluidique d'un des inserts.

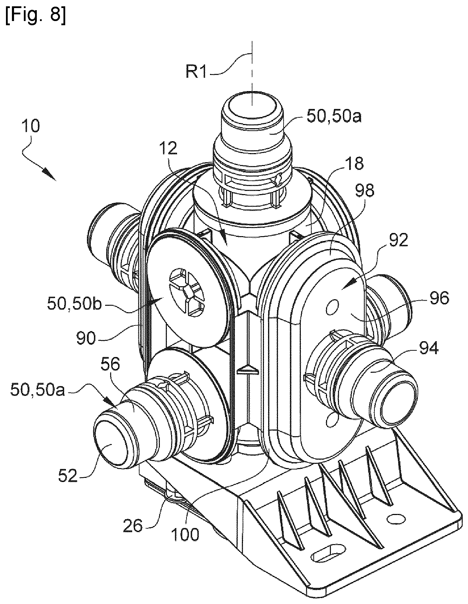

Un deuxième exemple de réalisation de la vanne 10 va maintenant être décrit au moyen des figures 8 à 11.

Il convient alors de considérer que seules les caractéristiques structurelles et fonctionnelles distinctes du premier exemple décrit aux figures 1 à 7 seront détaillées ici. Pour les caractéristiques communes il conviendra de se référer au premier exemple de l'invention des figures 1 à 7.

Par ailleurs, dans ce deuxième exemple de réalisation de la vanne 10, plusieurs exemples d'insert 50 vont être décrits. On nommera alors comme un premier exemple d'insert 50a, l'insert 50, 50a décrit aux figures 1 à 7.

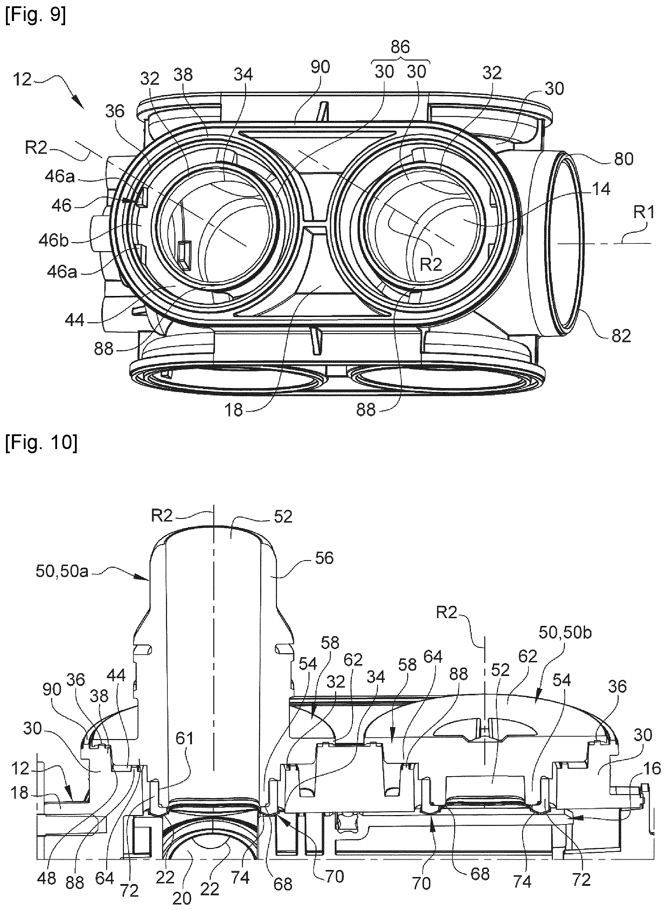

Tel que visible aux figures 8 et 9, le corps principal 12 de la vanne 10 multivoies comprend au moins deux tubulures 30 dont au moins les bouches d'entrée 32 s'étendent dans un plan commun.

Par exemple et de manière non limitative, le plan commun des bouches d'entrée 32 des au moins deux tubulures 30 est un plan radial considérant les axes R2 de révolution desdites au moins deux tubulures 30.

Ainsi, la vanne 10 de l'exemple illustré des figures 8 à 11 est une vanne 10 communément nommée « vanne à deux étages ».

Dans l'exemple illustré, la vanne 10 comprend de manière non limitative quatre paires 86 de tubulures 30, chaque paire 86 de tubulures 30 comprenant ses bouches d'entrée 32 qui s'étendent dans un plan commun.

Ainsi, on entend par paire 86 de tubulures 30, deux tubulures 30 dont au moins les bouches d'entrée 32 s'étendent dans un plan commun, ici un plan radial considérant les axes R2 de révolution des tubulures 30 de la paire 86 de tubulures 30.

Les paires 86 de tubulures 30 sont ici et de manière non limitative, espacées angulairement les unes des autres d'un angle de degrés égal.

Selon l'exemple illustré, les paires 86 de tubulures 30 sont espacées les unes des autres d'un angle égal à 90°.

Selon un autre exemple non illustré, la vanne peut comprendre trois paires de tubulures, espacées les unes des autres d'un angle égal à 120°.

Il convient par ailleurs de considérer que la vanne peut comprendre plus de deux tubulures dont les bouches d'entrée s'étendent dans le même plan commun de manière à former une vanne à trois étages, quatre étages ou plus.

Dans l'exemple illustré, les bouches de sortie 34 des tubulures 30 de chaque paire 86 de tubulures 30 s'étendent également dans un plan commun.

Dans la suite de la description, une seule paire 86 de tubulures 30 sera détaillée mais il convient de considérer que les caractéristiques fonctionnelles et structurelles décrites en rapport avec la paire 86 de tubulures 30 s'appliquent *mutatis mutandis à* l'ensemble des paires 86 de tubulures 30 de la vanne 10 multivoies.

Tel que visible à la figure 10, un insert 50, 50a selon le premier exemple est monté dans une des tubulures 30 de la paire 86, tandis qu'un insert 50b selon un deuxième exemple est monté dans l'autre tubulure 30 de la paire 86 de tubulures 30.

L'insert 50b selon le deuxième exemple comprend l'embout interne 54 qui délimite une partie du canal de passage fluidique 52 et la structure annulaire 58 présentant ici la forme d'une structure pleine de telle sorte à fermer une extrémité de l'embout interne 54.

On comprend donc que la structure annulaire 58 de l'insert 50b selon le deuxième exemple, obture une extrémité du canal de passage fluidique 52.

En d'autres termes, l'insert 50b selon le deuxième exemple forme un bouchon.

Comme pour le premier exemple d'insert 50a, la structure annulaire 58 de l'insert 50b selon le deuxième exemple comprend l'extension radiale 62 qui s'étend radialement de telle sorte qu'elle repose sur la première nervure annulaire 36 associée à la tubulure 30.

On comprend alors que l'insert 50b selon le deuxième exemple permet de fermer fluidiquement le canal de passage fluidique 52 à une des extrémités de l'embout interne 54 et permet ainsi de bloquer la circulation d'un fluide au travers de la tubulure 30 lorsque l'insert 50b est monté dans cette dernière.

Tel que visible aux figures 9 à 11, le corps principal 12 de la vanne 10 comprend une deuxième nervure annulaire 88 qui s'étend circulairement autour de chaque bouche d'entrée 32 des tubulures 30 de la paire 86 de tubulures 30.

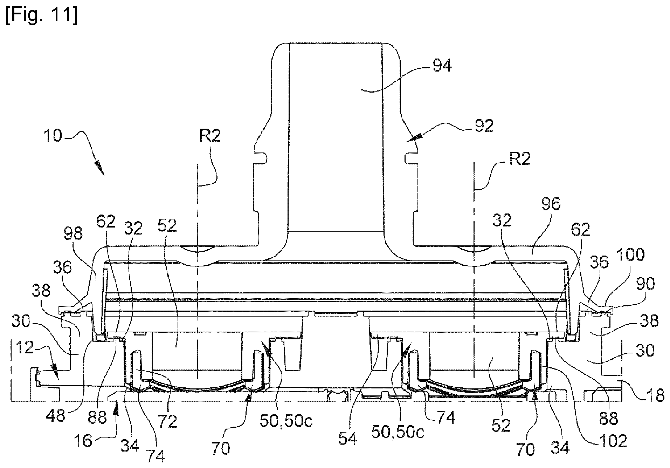

Plus particulièrement, chaque deuxième nervure annulaire 88 s'étend circonférentiellement et coaxialement autour de chaque bouche d'entrée 32 et de telle sorte qu'elle soit disposée radialement entre la circonférence externe de la bouche d'entrée 32 et la face latérale intérieure 48 de la portion annulaire 38 associée, tel que visible aux figure 10 et 11.

On comprend alors que chaque deuxième nervure annulaire 88 s'étend axialement depuis une épaisseur radiale de la tubulure 30.

Par ailleurs et tel que particulièrement visible à la figure 11, la première nervure annulaire 36 et la deuxième nervure annulaire 88 sont décalées axialement l'une de l'autre de sorte que la deuxième nervure annulaire 88 s'étende axialement entre la bouche d'entrée 32 de la tubulure 30 et la première nervure annulaire 36.

Un troisième exemple de l'insert 50, 50c va maintenant être décrit en rapport avec la figure 11.

L'insert 50c selon ce troisième exemple, comprend l'embout interne 54 qui délimite le canal de passage fluidique 52 et la structure annulaire 58 comprenant uniquement l'extension radiale 62 et au travers de laquelle s'étend le canal de passage fluidique 52.

On comprend que dans ce troisième exemple de l'insert 50c, sa structure annulaire est dépourvue de l'ensemble de surépaisseurs 64.

Selon ce troisième exemple de l'insert 50c, l'extension radiale 62 s'étend radialement de telle sorte qu'elle repose sur la deuxième nervure annulaire 88, tel que visible à la figure 11.

Ainsi, on comprend que la structure annulaire 58 de l'insert 50c selon le troisième exemple de réalisation présente un diamètre inférieur à la structure annulaire 58 des inserts 50a, 50b selon le premier exemple et le deuxième exemple visibles à la figure 10.

On comprend également que l'absence de l'ensemble de surépaisseurs 64 permet à l'extension radiale 62 de se rapprocher axialement de la deuxième nervure annulaire 88 et de telle sorte qu'elle repose sur cette dernière.

Ainsi, le contact entre l'extension radiale 62 de l'insert 50c et la deuxième nervure annulaire 88 permet d'opérer une action de soudage de manière à solidariser les inserts 50c selon le troisième exemple de réalisation sur le corps principal 12 et dans les tubulures 30.

Par ailleurs, selon cet exemple de réalisation de l'insert 50c, l'embout interne 54 comprend une encoche annulaire 102 dans laquelle se loge la paroi périphérique 72 de l'élément d'étanchéité fluidique 70.

La lèvre d'étanchéité 74 s'étend par ailleurs à l'extrémité de la paroi périphérique et de telle sorte qu'elle soit en contact avec le boisseau 16 tel que décrit précédemment.

Il convient par ailleurs de considérer que, comme pour les premier et deuxième exemples de l'insert 50a, 50b, le col de l'embout interne de l'insert 50c selon le troisième exemple présente une forme concave et que la lèvre d'étanchéité présente une forme concave complémentaire, tel que décrit précédemment.

Tel que visible aux figures 9 à 11, le corps principal 12 de la vanne 10 comprend une troisième nervure 90 qui s'étend en périphérie de chaque paire 86 de tubulures 30.

De manière plus précise, la troisième nervure 90 s'étend circonférentiellement autour des premières nervures annulaires 36 des tubulures 30 de la paire 86 de tubulures 30.

On comprend alors qu'une seule troisième nervure 90 s'étend simultanément autour des premières nervures annulaires 36 de la paire 86 de tubulures 30.

Ainsi, on comprend que la troisième nervure 90 présentent une forme oblongue dans un plan radial considérant les deuxièmes axes R2 de révolution de la paire 86 de tubulure 30.

Tel que visible sur l'exemple de la figure 11, la vanne 10 comprend une pièce de raccordement fluidique 92.

Plus particulièrement, la pièce de raccordement fluidique 92 comprend un canal de liaison fluidique 94 prolongé par une jupe de raccordement 96 configurée pour venir en recouvrement des tubulures 30 de la paire 86 de tubulures 30.

Ainsi, la jupe de raccordement 96 présente une forme oblongue.

De manière plus précise, la jupe de liaison 96 comprend une paroi latérale 98 qui s'étend axialement, considérant les deuxièmes axes R2 de révolution des tubulures 30 de la paire 86, et de manière à ce qu'elle s'insère entre la première nervure annulaire 36 et la deuxième nervure annulaire 88.

Toujours visible à la figure 11, une paroi de liaison 100 s'étend radialement depuis la paroi latérale 98 de la jupe de liaison 96 et de manière qu'elle s'étende en recouvrement au moins de la troisième nervure 90 lorsque la pièce de raccordement fluidique 92 est montée sur la paire 86 de tubulures 30.

De manière plus précise, la paroi de liaison 100 s'étend radialement depuis la périphérie externe de la paroi latérale 98 de telle sorte qu'elle soit au contact de la troisième nervure 90 lorsque la pièce de raccordement fluidique 92 est installée en recouvrement de la paire 86 de tubulures 36.

Ainsi, on comprend que le soudage de la pièce de raccordement fluidique 92 sur le corps principal 12 de la vanne 10 s'opère via la troisième nervure 90.

Une telle soudure de la pièce de raccordement fluidique 92 sur la troisième nervure 90 assure la liaison étanche entre ladite pièce de raccordement fluidique 92 et le corps principal 12 de la vanne 10.

On comprend alors que, les inserts 50c selon le troisième exemple qui sont solidaires des deuxièmes nervures annulaires 88 associées à la paire 86 de tubulures 30, permettent le positionnement de la pièce de raccordement fluidique 92 de manière que le fluide circulant au travers de leur canal de passage fluidique 52 débouche dans le volume délimité par la jupe de raccordement 92 pour finir dans le canal de liaison fluidique 94 de la pièce de raccordement fluidique 92.

Tel que visible à la figure 8, selon cet exemple de la vanne 10, l'ouverture axiale supérieure 80 reçoit un insert 50a selon le premier exemple.

Ainsi, on comprend que le boisseau 16 selon cet exemple de la vanne 10 est configuré pour permettre le raccordement fluidique entre les différentes tubulures et suivant le type d'insert 50a, 50b, 50c utilisé.

On tire ainsi avantage de la vanne multivoies telle qu'elle vient d'être décrite selon les différentes exemples, en ce qu'elle offre une modularité optimale pour un utilisateur en permettant avec un même corps principal et via son ensemble de nervures, d'installer des inserts de forme et de fonction différentes, tout en garantissant l'étanchéité de ladite vanne multivoies.

Par ailleurs, la structure des éléments d'étanchéité tels qu'ils viennent d'être décrits permet d'assurer de manière efficace leur bonne position angulaire par rapport au boisseau et aux inserts tout en améliorant leur maintien au sein de la vanne multivoies.

## Revendications

1. Vanne (10) multivoies comprenant au moins un corps principal (12) et un boisseau (16), le corps principal (12) délimitant un volume interne (14) configuré pour recevoir le boisseau (16),
le corps principal (12) formant au moins deux tubulures (30) s'étendant selon deux axes (R2) distincts, chaque tubulure (30) comprenant une bouche d'entrée (32) à son extrémité axiale externe et une bouche de sortie (34) à son extrémité axiale interne débouchant dans le volume interne (14) du corps principal (12),
le corps principal (12) comprenant au moins deux nervures annulaires (36, 88) s'étendant à l'extérieur du volume interne (14), chaque nervure annulaire (36, 88) s'étendant autour d'au moins une des bouches d'entrée (32) d'une des tubulures (30),
la vanne (10) comprenant au moins deux inserts (50, 50a, 50b, 50c), chaque insert (50, 50a, 50b, 50c) comprenant au moins un embout interne (54) configuré pour s'insérer dans une des tubulures (30), chaque insert (50, 50a, 50b, 50c) comprenant une structure annulaire (58) qui comprend au moins une extension radiale (62) configurée pour être au contact de la nervure annulaire (36, 88) lorsque l'embout interne (54) se loge dans la tubulure (30), chaque insert (50, 50a, 50b, 50c) comprenant un élément d'étanchéité fluidique (70) emmanché sur l'embout interne (54) et configuré pour être au contact du boisseau (16) lorsque l'embout interne (54) se loge dans la tubulure (30),
le corps principal (12) comprenant au moins deux portions annulaires (38) qui s'étendent chacune coaxialement autour d'une des tubulures (30), deux premières nervures annulaires (36) s'étendant chacune axialement en saillie d'une couronne externe (42) d'une des portions annulaires (38), la portion annulaire (38) s'étendant à une distance radiale non nulle de la circonférence de la bouche d'entrée (32) de la tubulure (30).

2. Vanne (10) multivoies selon la revendication précédente, dans laquelle l'embout interne (54) de chacun des inserts (50, 50a, 50b, 50c) comprend une extrémité formant un col (68), l'élément d'étanchéité fluidique (70) présentant une forme annulaire délimitée par une paroi périphérique (72) et à l'extrémité de laquelle s'étend une lèvre d'étanchéité (74) configurée pour recouvrir au moins en partie le col (68) de l'embout interne (54) et de manière à être au contact du boisseau (16) lorsque l'embout interne (54) se loge dans la tubulure (30).

3. Vanne (10) multivoies selon la revendication précédente, dans laquelle le col (68) de l'embout interne (54) présente une forme concave, la lèvre d'étanchéité (74) de l'élément d'étanchéité (70) présentant une forme concave complémentaire avec le col (68).

4. Vanne (10) multivoies selon l'une quelconque des revendications 2 ou 3, dans laquelle l'embout interne (54) comprend des nervures de guidage (76) périphériques et la paroi périphérique (72) de l'élément d'étanchéité fluidique (70) comprend des rainures internes (78) configurées pour coopérer avec les nervures de guidage (76), de manière à définir la position angulaire de l'élément d'étanchéité (70) sur l'embout interne (54).

5. Vanne (10) multivoies selon l'une quelconque des revendications précédentes, dans laquelle un moyen de détrompage angulaire (46) est formé sur une surface latérale intérieure (48) de chacune des portions annulaires (38) et au moins un des inserts (50, 50a, 50b) comprend un organe de détrompage complémentaire (66) apte à coopérer avec le moyen de détrompage angulaire (46) de manière à définir une position angulaire de l'insert (50, 50a, 50b) par rapport à la tubulure (30).

6. Vanne (10) multivoies selon l'une quelconque des revendications précédentes, dans laquelle chacun des inserts (50, 50a, 50c) délimite un canal de passage fluidique (52) autorisant le passage d'un fluide au travers de la tubulure (30) lorsque l'insert (50, 50a, 50c) est monté dans la tubulure (30) ou forme un bouchon (50, 50b) bloquant le passage d'un fluide au travers de la tubulure (30).

7. Vanne (10) multivoies selon l'une quelconque des revendications précédentes, dans laquelle le corps principal (12) comprend au moins deux deuxièmes nervures annulaires (88) qui s'étendent chacune circulairement et de manière coaxiale autour d'une des bouches d'entrée (32) d'une des tubulures (30) et de manière qu'elles s'étendent chacune dans un volume délimité par l'une des portions annulaires (38).

8. Vanne (10) multivoies selon la revendication précédente, dans laquelle les deuxièmes nervures annulaires (88) sont décalées axialement par rapport aux premières nervures annulaires (36), en considérant l'axe (R2) de leur tubulure (30) respective.

9. Vanne (10) multivoies selon l'une quelconque des revendications 7 ou 8, comprenant au moins un insert (50, 50c) dont l'extension radiale (62) est configurée pour être au contact d'une des deuxièmes nervures annulaires (88) lorsque son embout interne (54) se loge dans la tubulure (30).

10. Vanne (10) multivoies selon l'une quelconque des revendications précédentes, dans laquelle au moins les au moins deux tubulures (30) comprennent leurs bouches d'entrée (32) qui s'étendent dans un plan commun.

11. Vanne (10) multivoies selon la revendication précédente, dans laquelle le corps principal comprend une troisième nervure (90) qui s'étend en périphérie des premières nervures annulaires (36) associées aux au moins deux tubulures (30) dont les bouches d'entrée (32) s'étendent dans un plan commun.

12. Vanne (10) multivoies selon la revendication précédente, comprenant une pièce de raccordement fluidique (92) configurée pour recouvrir au moins les deux bouches d'entrée (32) qui s'étendent dans un plan commun des au moins deux tubulures (30), la pièce de raccordement fluidique (92) comprenant au moins une paroi de liaison (100) qui s'étend en recouvrement de la troisième nervure (90).
